# EUROPÄISCHE PATENTSCHRIFT

(11) **EP 1 195 532 B1**
(45) Veröffentlichungstag und Bekanntmachung des Hinweises auf die Patenterteilung: **25.08.2004**
(21) Anmeldenummer: 01123529.8
(22) Anmeldetag: 29.09.2001
(51) Int. Cl.: F16B 23/00

(54) **Verbindungselement mit einem Kopf und einem zumindest teilweise mit einem Gewinde versehenen Schaft**
Connecting element comprising a head and an at least partially threaded shaft
Elément de liaison ayant un tête et une tige au moins partiellement filetée

(30) Priorität: 04.10.2000 DE 10048918
(43) Veröffentlichungstag der Anmeldung: 10.04.2002
(73) Patentinhaber: Kamax-Werke Rudolf Kellermann GmbH & Co. KG, 37520 Osterode am Harz (DE)
(72) Erfinder: Hartmann, Gunther Dr.-Ing., 36304 Alsfeld (DE); Kirbach, Klaus, 35315 Homberg/Ohm (DE); Köhler, Hermann Dipl.-Ing., 36304 Alsfeld (DE)
(74) Vertreter: Patentanwälte Rehberg + Hüppe

(56) Entgegenhaltungen:
- DE-B- 1 298 949
- US-A- 3 584 667
- US-A- 5 207 132
- "ELLIPSES ADVANCE FASTENER DRIVE SYSTEM" MACHINE DESIGN, PENTON,INC. CLEVELAND, US, Bd. 66, Nr. 4, 21. Februar 1994 (1994-02-21), Seite 24 XP000438232 ISSN: 0024-9114

## Beschreibung

Die Erfindung betrifft ein Verbindungselement mit einem Kopf und einem zumindest teilweise mit einem Gewinde versehenen Schaft, wobei der Kopf in punktsymmetrischer Anordnung um die Achse des Verbindungselements einen keilwellenförmigen Innenmehrkant aus im wesentlichen in Umfangsrichtung gerichteten Tangentialflächen aus zwei an jede Tangentialfläche anschließenden, in etwa radial ausgerichteten oder zumindest angenähert parallel zueinander angeordneten Radialflächen und aus einer etwa in Umfangsrichtung verlaufenden Verbindungsfläche, die zwei an benachbarte Tangentialflächen anschließende Radialflächen verbindet, aufweist. Die Erfindung beschäftigt sich mit der Ausbildung eines Verbindungselements, insbesondere einer Schraube, in deren Kopf eine Ausnehmung in Form eines keilwellenförmigen Innenmehrkants, also mit sich achsparallel erstreckenden Flächen, vorgesehen ist. Wesentlich sind dabei eine Mehrzahl von radial oder zumindest etwa radial sich erstreckender Radialflächen, um mit einem entsprechend geformten Spezialschlüssel hohe Drehmomente beim Anziehen der Schraube übertragen zu können. Die Radialflächen können paarweise auch parallel zueinander angeordnet sein, was für die Übertragung hoher Drehmomente mit einem Spezialschlüssel optimal ist. Im Gegensatz zu solchen Schrauben mit keilwellenförmigem Innenmehrkant gibt es sogenannte Innensechsrundschrauben, die sich dadurch kennzeichnen, daß der radiale Anteil der Übertragungsflächen relativ klein ausgebildet ist. Darüber hinaus gibt es selbstverständlich die üblichen Innensechskantschrauben, die mit einem Sechskantschlüssel der Normreihe mit sechs ebenen Begrenzungsflächen angezogen bzw. gelöst werden. Alle solche Schrauben mit Ausnahme der Innensechskantschrauben benötigen für den Normalbetrieb einen Spezialschlüssel, welcher entsprechend passend zu der Ausnehmung im Kopf der Schraube gestaltet ist. Mit solchen Spezialschlüsseln lassen sich solche Schrauben gut und bestimmungsgemäß handhaben. Fehlt jedoch der Spezialschlüssel, so steht in den meisten Fällen noch ein Sechskantschlüssel der Normreihe zur Verfügung, mit welchem bei manchen Schrauben ein Notbetrieb möglich ist. Innensechsrundschrauben können mit einem Sechskantschlüssel nicht erfolgreich angezogen werden. Sie lassen nur das Einführen eines Sechskantschlüssels mit relativ kleiner Querschnittsfläche zu, so daß dort die Gefahr besteht, daß beim Anziehen entweder der Sechskantschlüssel abbricht oder aber das Profil der Innensechsrundschraube verformt wird.

Ein Verbindungselement der eingangs beschriebenen Art ist aus Fig. 2 der EP 0 670 431 B1 bekannt. Dort werden auch als Stand der Technik die drei Arten von Schraubenkopfausbildungen mit Hohlraum beschrieben, nämlich normale Innensechskantschrauben, eine Schraube mit keilwellenförmigem Innenmehrkant und eine Innensechsrundschraube. Die gelappten Schrauben mit dem keilwellenförmigen Innenmehrkant sollen im Notbetrieb, d. h. wenn kein entsprechender Spezialschlüssel zur Verfügung steht, mit einem Sechskantschlüssel der Normreihe betätigt werden. Zwischen den Lappen bzw. zwischen den Radialflächen benachbarter Lappen erstreckt sich eine gerade und eben verlaufende Verbindungsfläche. Wird eine solche Schraube im Notbetrieb mit einem Sechskantschlüssel der Normreihe betätigt, besteht die Gefahr, daß das Profil des Innenmehrkants im Übergangsbereich zwischen den Verbindungsflächen und den Radialflächen deformiert wird, so daß eine nachfolgende Betätigung mit dem Spezialschlüssel nicht mehr möglich sein kann. Um dieser Problematik entgegenzuwirken, wird die Verbindungsfläche zwischen den parallel zueinander angeordneten und im wesentlichen radial ausgerichteten Radialflächen zweier Lappen gemäß Fig. 4 der EP 0 670 431 B1 dachförmig geneigt ausgebildet, und zwar bestehend aus zwei ebenen Flächen oder Abschnitten, die zwischen jedem Paar benachbarter Lappen eingeschlossen sind. Diese beiden schräggestellten Flächen oder Abschnitte bilden an dem Schraubenkopf in Anziehrichtung und in Losdrehrichtung je ein regelmäßiges Polygon, wobei gedachte Verlängerungen der schräggestellten Flächen benachbarte schräggestellte Flächen desselben regelmäßigen Polygons nicht schneiden. Ein Notbetrieb einer solchen Schraube mit einem Sechskantschlüssel ist nur dann möglich, wenn sich der Sechskantschlüssel auch in den gelappten Hohlraum im Kopf der Schraube einführen läßt. Ein Sechskantschlüssel mit maximalen Abmessungen, der sich gerade in einen solchen gelappten Hohlraum noch einführen läßt, besitzt eine Schlüsselweite entsprechend dem Abstand der Verschneidungskanten der ebenen Flächen oder Abschnitte an jeder Verbindungsfläche. Wird ein solcher Sechskantschlüssel eingeführt, so läßt er sich theoretisch relativ zur Schraube nicht mehr verdrehen. Er liegt unter Linienberührung an der Verschneidungskante an. Ein Drehmoment kann nur unter Reibschluß übertragen werden, der im Regelfall nicht ausreicht, die Schraube zu lösen. Wird jedoch ein Sechskantschlüssel mit kleineren Abmessungen in den Innenraum des keilwellenförmigen Innenmehrkants eingeführt, was problemlos möglich ist und dem Regelfall entsprechen muß, so läßt sich ein solcher Schlüssel vor dem Aufbringen des Drehmoments in dem Innenraum zwar noch verdrehen. Die kraftlose Verdrehung endet jedoch regelmäßig unter Linienberührung der ebenen Flächen des Sechskantschlüssels im Übergangsbereich zwischen den Verbindungsflächen und den Radialflächen des Innenmehrkants, sodaß dieser Übergangsbereich im Notbetrieb beim Aufbringen eines Drehmoments nach wie vor deformiert wird. Theoretisch ist ein Sechskantschlüssel mit solchen Abmessungen vorstellbar, der an der schräggestellten ebenen Fläche der Verbindungsfläche flächig anliegen könnte. Eine solche flächige Anlage ist jedoch sehr unwahrscheinlich, weil ein solcher Sechskantschlüssel in der Normreihe der Sechskantschlüssel nur sehr selten vorkommt und darüber hinaus auch der keilwellenförmige Innenmehrkant nur toleranzbehaftet herstellbar ist. Eine flächige Auflage der beiden ebenen Flächen aufeinander kommt nur bei dem unwahrscheinlichen Zusammenspiel der Toleranzen zwischen Innenmehrkant und Sechskantschlüssel vor. Es kann praktisch davon ausgegangen werden, daß im Notbetrieb mit einem Innensechskant der Normreihe immer Spiel zwischen der Kopfausbildung und dem Sechskantschlüssel vorhanden sein muß. Es tritt dann im Notbetrieb immer Linienberührung zwischen den Teilen auf. Daraus folgt zwangsläufig die Deformation des Übergangsbereichs zwischen den Verbindungsflächen und den Radialflächen des Innenmehrkants. Bei relativ kleinem Spiel zwischen Sechskantschlüssel und den Verbindungsflächen des Innenmehrkants tritt dagegen eine nachteilige Abscherwirkung im mittleren Bereich der Verbindungsfläche verbunden mit dem Durchdrehen des Sechskantschlüssels über die deformierte Verschnittkante der beiden schräggestellten Flächenabschnitte der Verbindungsfläche auf.

Die EP 0 430 543 A1 zeigt ein Verbindungselement mit einem Kopf und einem zumindest teilweise mit einem Gewinde versehenen Schaft. Der Kopf besitzt eine Vertiefung aus einem keilwellenförmigen Innenmehrkant, der fünf oder sechs sich nach außen erstreckende Ausnehmungen aufweisen kann. Der Innenmehrkant weist außen in Umfangsrichtung gerichtete Tangentialflächen auf. Diese Tangentialflächen werden von Tangenten zu zwei kleinen Kreisen gebildet und liegen insgesamt auf einem Umfang um den Mittelpunkt des Innenmehrkants. An diese Tangentialflächen schließen sich kreisbogenförmig verlaufende Flächen an, die aus den Umfangsflächen der kleinen Kreise gebildet werden. Der Innenmehrkant besitzt keine in Umfangsrichtung verlaufende Verbindungsflächen. Die Verbindungsflächen werden vielmehr als kreisbogenförmig gekrümmte Flächen angeordnet, die von relativ großen fiktiven Kreisen gebildet werden, deren Mittelpunkte auf der Umfangslinie der Tangentialflächen liegen. Von den Mittelpunkten der beiden Arten von Kreisen werden fiktive Fünf- oder Sechsecke gebildet, zwischen denen die kreisbogenförmigen Stücke der nach außen gerichteten Ausnehmungen durch geradlinige Flächenbereiche verbunden sind, die jeweils tangential zu den beiden Arten von Kreisen angeordnet sind. Diese geradlinigen Flächenbereiche besitzen zur Übertragung des Drehmoments mit dem entsprechenden Spezialschlüssel in nachteiliger Weise nur eine relativ kurze Ausdehnung in radialer Richtung. Sie schließen nicht an die äußeren Tangentialflächen an, sondern sind radial nach innen auf einen kleineren Radius verlagert. Der Kontakt beim Anziehen eines solchen Verbindungselementes durch einen entsprechend geformten Spezialschlüssel soll im Bereich der geradlinigen Flächenbereiche linienförmig erfolgen. Zulässige Toleranzen können sich nur so auswirken, daß die linienförmige Berührung über den kurzen Bereich der radialen Erstreckung der ebenen Flächenbereiche wandern kann. Bei dieser Wanderung verändert sich der Antriebswinkel nicht. Damit wird erreicht, daß die effektive Drehmomentübertragung zwischen Spezialschlüssel und Verbindungselement nur in einem relativ kleinen Bereich schwanken kann. Dies erbringt den Vorteil, daß die im Normalbetrieb aufbringbaren Drehmomente nur in einem kleinen Bereich schwanken können und also weitgehend konstant sind. Nachteilig an dieser Konstruktion ist jedoch, daß der an sich bis zu den äußeren tangentialen Flächen zur Verfügung stehende Radius bei der Drehmomentübertragung nicht ausgenutzt wird und daß eine linienförmige Berührung der Teile für die Drehmomentübertragung herangezogen wird. Bei diesem bekannten Verbindungselement ist nicht vorgesehen, daß es im Notbetrieb mit einem Sechskantschlüssel der Normreihe betätigt werden kann. Die Bildung der Kontur mit den beiden Arten von Kreisen läßt auch nur das Einführen eines relativ kleinen Sechskantschlüssels zu, bei dem dann die Gefahr des Durchdrehens besteht.

Aus der DE-AS 17 28 574 ist ein Verbindungselement bekannt, das ebenfalls einen Kopf und einen mit Gewinde versehenen Schaft aufweist. Der Kopf besitzt eine Ausnehmung in Form eines keilwellenförmigen Innenmehrkantes. Die Kontur des Innenmehrkantes wird von zwei tangential ineinander übergehenden fiktiven Kreisen gebildet, wobei der größere Kreis mindestens einen doppelt so großen Radius wie die kleineren Kreise aufweisen. Es gibt keine in Umfangsrichtung gerichteten Tangentialflächen, und es gibt sich keine im wesentlichen radial ausgerichteten Radialflächen. Es versteht sich, daß die Mittelpunkte der kleineren Kreise auf den Ecken eines ersten Sechsecks und die Mittelpunkte der größeren Kreise auf den Ecken eines zweiten Sechsecks angeordnet sind. Zu einem solchen Verbindungselement gehört ein entsprechend ausgebildeter Spezialschlüssel. Ein Notbetrieb mit einem Sechskantschlüssel ist nicht vorgesehen.

Ein weiteres Verbindungselement in Form einer Schraube ist aus der US 2,969,250 bekannt. Auch hier ist im Kopf der Schraube ein keilwellenförmiger Innenmehrkant in punktsymmetrischer Anordnung um die Achse der Schraube angeordnet. Der Innenmehrkant weist in Umfangsrichtung gerichtete Tangentialflächen auf, die ohne Einsatz von Radialflächen direkt über kreisbogenförmig gestaltete Verbindungsflächen verbunden sind. Die Kreise der kreisbogenförmigen Verbindungsflächen werden durch zwei Punkte festgelegt, die von den Endpunkten benachbarter Tangentialflächen gebildet werden. Der dritte Punkt dieses Kreises wird als Tangentialpunkt zu dem Innenkreis eines solchen Sechskantschlüssels festgelegt, dessen Ecken auf dem die Tangentialflächen erzeugenden Kreis liegen. Der Durchmesser dieses Innenkreises entspricht wie üblich der Schlüsselweite des Sechskants. Der Kreis, der die kreisbogenförmigen Verbindungsflächen bildet, besitzt damit einen Radius, der dem Durchmesser der Schlüsselweite entspricht. Dieses so ausgebildete Verbindungselement besitzt den Nachteil, daß im Normalbetrieb mit dem Spezialschlüssel das Drehmoment nur unter Linienberührung übertragen werden kann und dabei die Gefahr des Durchdrehens oder Abscherens besteht. Andererseits können im Notbetrieb nur solche Innensechskantschlüssel der Normreihe eingesetzt werden, die in den Innenraum des Innenmehrkants einführbar sind. Viele dieser Sechskantschlüssel werden beim Verdrehen im mittleren Bereich der kreisbogenförmigen Verbindungsfläche zur Anlage gelangen, so daß hier die Gefahr des Durchdrehens besteht.

Der Erfindung liegt die Aufgabe zugrunde, ein Verbindungselement der eingangs beschriebenen Art bereitzustellen, welches im Notbetrieb mit einem Sechskantschlüssel der Normreihe verläßlich gelöst und angezogen werden kann, ohne daß dabei die Gefahr besteht, den Übergangsbereich zwischen den Verbindungsflächen und den Radialflächen des Innenmehrkants zu deformieren. Darüber hinaus soll ein solches Verbindungselement mit keilwellenförmigem Innenmehrkant auch mit einem entsprechenden Spezialschlüssel betätigbar sein, und zwar ohne die dem Notbetrieb zugeordneten Flächen zu deformieren.

Erfindungsgemäß wird dies bei einem Verbindungselement der eingangs beschriebenen Art dadurch erreicht, daß für die Verwendung eines Sechskantschlüssels der Normreihe im Notbetrieb die Verbindungsfläche kreisbogenförmig gekrümmt und in Richtung auf die Achse des Verbindungselementes konvex ausgebildet ist, wobei der den Kreisbogen bildende Kreis von zwei Punkten (P₁), die sich als Schnittpunkte der Kontur des symmetrisch in den Innenmehrkant eingesteckten Sechskantschlüssels nach einer Drehung von etwa 8° bis 12° mit den Radialflächen des Innenmehrkants ergeben, und einem dritten Punkt (P₂), der tangential zu einem Kreis mit einem Durchmesser (D₂) um die Achse des Verbindungselements liegt und der Durchmesser (D₂) um etwa 0,08 mm bis 0,15 mm größer als der Durchmesser (D₃) des minimalen Innenkreises der Verbindungsflächen des Innenmehrkants entsprechend dem minimalen Innenkreis eines dem Sechskantschlüssel zugeordneten Sechskantloches der Normreihe bemessen ist, gebildet wird.

Die Verbindungsfläche zwischen den innen liegenden Enden der Radialflächen benachbarter Ausnehmungen oder Lappen des Innenmehrkants sind nunmehr Zylinderflächen und besitzen einen Querschnitt in Form eines Teils eines Kreisbogens. Der den Kreisbogen bildende Kreis weist einen Mittelpunkt auf, der in der Regel außerhalb der Kopffläche des Verbindungselementes liegt, und zwar auf einer Linie, die die Achse der Schraube mit dem Mittelpunkt der jeweiligen Verbindungsfläche verbindet. Ein solcher Kreis wird durch drei Punkte festgelegt bzw. mathematisch bestimmt. Die ersten beiden Punkte werden wie folgt konstruiert. Man geht von der Kontur eines Sechskantschlüssels der Normreihe aus, insbesondere von der Kontur, die von dem größten innerhalb des Toleranzbandes zulässigen Sechskantschlüssels gebildet wird. Ein solcher Sechskantschlüssel läßt sich in den Innenmehrkant so einführen, daß die Ecken des Sechskantschlüssels in der Mitte der lappenförmigen Ausnehmungen auf halber Entfernung zwischen den beiden Radialflächen eines Lappens liegen. Die Kontur dieses Sechskantschlüssels wird dann um etwa 8° bis 12°, vorzugsweise um 10°, gedreht. Als Schnittpunkt der gedrehten Kontur des Sechskantschlüssels mit der im Toleranzband größten Gestaltung ergeben sich die Schnittpunkte mit den Radialflächen und damit die ersten beiden Punkte des Kreises. Die beiden so festgelegten Punkte bilden damit einen Grenzbereich, in welchem eine linienförmige Anlage des Sechskantschlüssels an dem Übergangsbereich zwischen den Radialflächen und den Verbindungsflächen stattfinden würde. Diese Grenze gilt es einzuhalten bzw. zu vermeiden. Die effektive Anlage zwischen einem Sechskantschlüssel der Normreihe und dem Übergangsbereich soll dagegen benachbart zu der Kante des Übergangsbereiches im benachbarten Bereich der Verbindungsflächen stattfinden. Es wird also gleichsam zwischen den Normalbetrieb und den Notbetrieb ein Freiraum bzw. eine Freifläche gelegt, die weder im Normalbetrieb noch im Notbetrieb belastet wird. Der Notbetrieb findet ausschließlich unter flächenmäßiger Anlage eines Mittelbereiches einer Seitenfläche des Sechskantschlüssels mit einem Anlagebereich an der kreisbogenförmigen Verbindungsfläche statt. Wo, d. h. an welcher Stelle und mit welcher Ausdehnung sich diese flächige Anlage ergibt, hängt von der Dimensionsierung des Kreises und damit von der Festlegung des dritten Punktes des Kreises ab. Für die Bestimmung dieses dritten Punktes ist zwar im weitesten Sinne auch die Kontur des Sechskantschlüssels der Normreihe maßgeblich, genauer jedoch die Kontur des diesem Sechskantschlüssel zugeordneten Sechskantloches. Ausgehend von einem Durchmesser des im festgelegten Toleranzband minimalen Innenkreises des Sechskantloches wird ein Durchmesser eines Kreises um die Achse des Verbindungselementes festgelegt, dessen Durchmesser um etwa 0,08 bis 0,15 mm größer ausgebildet ist. Der Durchmesser dieses Kreises berührt den festzulegenden Kreis, dessen Mittelpunkt außerhalb der Kopffläche der Schraube liegt, tangential. Der dritte Punkt ist also der Berührpunkt dieser beiden Kreise. Als Mittelpunkt des die kreisbogenförmige Kontur der Verbindungsflächen festlegenden Kreises ergibt sich der Schnittpunkt der Mittelsenkrechten zwischen jeweils zwei der genannten Punkte. Die Lage des dritten Punktes ermöglicht es, daß alle von dem Toleranzband erfaßten Sechskantschlüssel einer Schlüsselabmessung der Normreihe in den Innenraum des Innenmehrkants einsteckbar sind und kraftlos bis zur Anlage der Sechskantflächen des Sechskantschlüssels an der Verbindungsfläche zwischen benachbarten Ausnehmungen des Innenmehrkants zur Anlage kommen. Die Anlage ist relativ weit von der Mitte der jeweiligen Verbindungsfläche entfernt, jedoch auch etwas von dem Übergangsbereich zwischen den Verbindungsflächen und den Radialflächen entfernt. Hier liegt je nach Toleranzpaarung immer eine kreisbogenförmig gekrümmte Fläche an einer mehr oder weniger eben gestalteten Sechskantfläche des Sechskantschlüssels an. Beim Aufbringen eines Drehmomentes im Notbetrieb vergrößert sich die linienförmige Anlage zu einer flächigen Anlage, wobei die Flächenpressung entsprechend geringer wird.

Die Verbindungsfläche zwischen zwei an benachbarte Tangentialflächen anschließenden Radialflächen wird also nicht mehr eben ausgebildet, und zwar weder als eine ebene durchgehende Fläche noch als zwei dachförmig schräg geneigt gegeneinandergestellte ebene Flächen. Der Gedanke der Erfindung besteht vielmehr darin, die Verbindungsfläche als eine kreisbogenförmig gekrümmte Fläche auszubilden, die nach innen konvex ausgebildet ist. Damit ist sichergestellt, daß im Notbetrieb mit einem Sechskantschlüssel der Normreihe die ebenen Flächen des Sechskantschlüssels und die kreisbogenförmig gekrümmten konvexen Verbindungsflächen aneinander zur Anlage gelangen. Bei auftretendem Kontakt zwischen diesen Flächen liegt am Ende der kraftlosen Verdrehung des Sechskantschlüssels zwar auch nur eine Linienberührung vor. Diese geht der Hertzschen Theorie folgend jedoch bei anwachsendem Drehmoment durch elastische Deformation der Teile in eine Flächenberührung über. Diese flächige Anlage der Teile aneinander während der Übertragung des Drehmoments im Notbetrieb tritt überraschenderweise immer ein, und zwar unabhängig von der toleranzbehafteten Paarung zwischen Sechskantschlüssel und den kreisbogenförmigen Verbindungsflächen des Innenmehrkants. Die elastische Verformung erbringt also immer eine flächige Anlage, so daß genügend große Flächen zur Übertragung des Drehmoments vorhanden sind, ohne daß einerseits die Gefahr des Durchdrehens des Sechskantschlüssels oder seines Abbrechens und andererseits die Gefahr der Deformation zwischen den Verbindungsflächen und den Radialflächen des Innenmehrkants besteht.

Wenn die geometrische Gestaltung der kreisbogenförmig gekrümmten Verbindungsfläche so ausgeführt wird, daß das Verbindungselement auch mit dem Spezialschlüssel für die gattungsbildende Schraube angezogen werden kann, ergibt sich der zusätzliche Vorteil, daß ein solches Verbindungselement auch mit einem Sechsrundschlüssel entsprechender Größe angezogen werden kann. Ein solches Verbindungselement läßt sich damit nicht nur in einem ersten Notbetrieb mit einem Sechskantschlüssel der Normreihe, sondern auch noch in einem zweiten Notbetrieb mit einem etwa vorhandenen Sechsrundschlüssel anziehen.

Um eine Betätigung mit dem Spezialschlüssel passend zu der Schraube gemäß Fig. 4 der EP 0 670 431 B1 anziehen zu können, müssen freilich die dort beschriebenen geometrischen Bedingungen auch bei den kreisbogenförmig gekrümmten Verbindungsflächen eingehalten werden. Je nach den Toleranzpaarungen, die zwischen dem Sechskantschlüssel und der Innenmehrkantausbildung auftreten, wird sich der Mittelpunkt der flächenförmigen Anlage verlagern. Bei geringem Spiel zwischen den Teilen wird die Anlagefläche von der Tangentialfläche der gelappten Ausnehmung weiter entfernt liegen als bei relativ großem Spiel zwischen den Teilen.

Wenn der Punkt (P₁) als Schnittpunkt der Kontur des symmetrisch in den Innenmehrkant eingelegten Sechskantschlüssels nach einer Drehung von etwa 10° mit den Radialflächen des Innenmehrkants festgelegt ist, lassen sich die notwendigerweise auftretenden Toleranzen zwischen dem Innenraum des Innenmehrkants mit den kreisbogenförmigen Verbindungsflächen und den ebenen Verbindungsflächen am Außenumfang des Innensechskants der Normreihe besonders gut beherrschen. Der Innenraum wird dabei einerseits groß genug, um die jeweiligen Sechskantschlüssel mit dem Nennmaß einfach einstecken zu können, ohne daß die Gefahr des Durchdrehens im Notbetrieb auftritt. Andererseits liegt die Kontaktfläche der flächigen Anlage auf einem relativ großen Radius, ohne allerdings den Übergangsbereich zwischen der Verbindungsfläche und den Radialflächen zu erreichen.

Der Durchmesser (D₂) des den dritten Punkt (P₂) bildenden Kreises kann insbesondere um etwa 0,1 mm größer als der Durchmesser (D₃) des minimalen Innenkreises der Verbindungsflächen des Innenmehrkants entsprechend dem minimalen Innenkreis des dem Sechskantschlüssel zugeordneten Sechskantloches bemessen sein. Auch dies stellt eine bevorzugte Bemaßung dar.

Wenn die Übergänge zwischen den Verbindungsflächen und den Radialflächen abgerundet ausgebildet sind, ergibt sich selbst bei Verwendung relativ kleiner Sechskantschlüssel, d. h. bei großem Spiel zwischen den Teilen, die gewünschte flächige Anlage, wie sie zur Übertragung eines großen Drehmoments vorteilhaft ist.

Wenn die Übergänge zwischen den Tangentialflächen und den Radialflächen abgerundet ausgebildet sind, trägt dies zur Vermeidung bzw. Begrenzung von Kerbspannungen, insbesondere im Normalbetrieb, bei.

Die kreisbogenförmige Krümmung der Verbindungsfläche sollte zumindest in zwei Bereichen der Verbindungsfläche im Anschluß an die Punkte (P₁) in Richtung auf den Punkt (P₂) vorgesehen sein, sodaß bei Verwendung des Sechskantschlüssels der Normreihe im Notbetrieb diese Bereiche der konvexen Verbindungsflächen des keilwellenförmigen Innenmehrkants jeweils an ebenen Flächen des Sechskantschlüssels anliegen. Es ist also nicht unbedingt erforderlich, daß die kreisbogenförmige Kontur der Verbindungsflächen in deren Mittelbereich durchgehend vorgesehen ist. In diesem Mittelbereich der Verbindungsflächen findet ohnehin keine Anlage im Notbetrieb statt. Die Mittelbereiche können daher auch gerade bzw. als ebene Flächenbereiche gestaltet sein. Eine durchgehend kreisbogenförmige Ausbildung hat aber den Vorteil, daß die Werkzeuge für die Herstellung eines solchen Verbindungselements relativ einfach herstellbar sind.

In allen Fällen sollte der Radius des die Verbindungsfläche bildenden Kreises so bemessen und angeordnet sein, daß bei Verwendung eines Sechskantschlüssels der Normreihe im Notbetrieb die konvexen Verbindungsflächen des keilwellenförmigen Innenmehrkants jeweils an einer ebenen Fläche des Sechskantschlüssels anliegen. Durch die Verwirklichung der flächigen Anlage bei allen vorkommenden Toleranzpaarungen zwischen Sechskantschlüssel und keilwellenförmigem Innenmehrkant wird zugleich die Gefahr des Durchdrehens des Sechskantschlüssels im Notbetrieb oder eines Abbrechens vermieden.

Die Erfindung wird anhand bevorzugter Ausführungsformen weiter erläutert und beschrieben. Es zeigen:
- Fig. 1: eine Draufsicht auf den Kopf des Verbindungselements mit eingesetztem Sechskantschlüssel im Notbetrieb,
- Fig. 2: eine ähnliche Ansicht eines Verbindungselements mit abgerundetem Übergangsbereich zwischen der Verbindungsfläche und der Radialfläche,
- Fig. 3: eine vergrößerte Detaildarstellung des Verbindungselements gemäß Fig. 1,
- Fig. 4: eine noch weiter vergrößerte Detaildarstellung des Verbindungselements gemäß Fig. 1, und
- Fig. 5: eine Verdeutlichung des Konstruktionsprinzips der kreisbogenförmigen Verbindungsflächen.

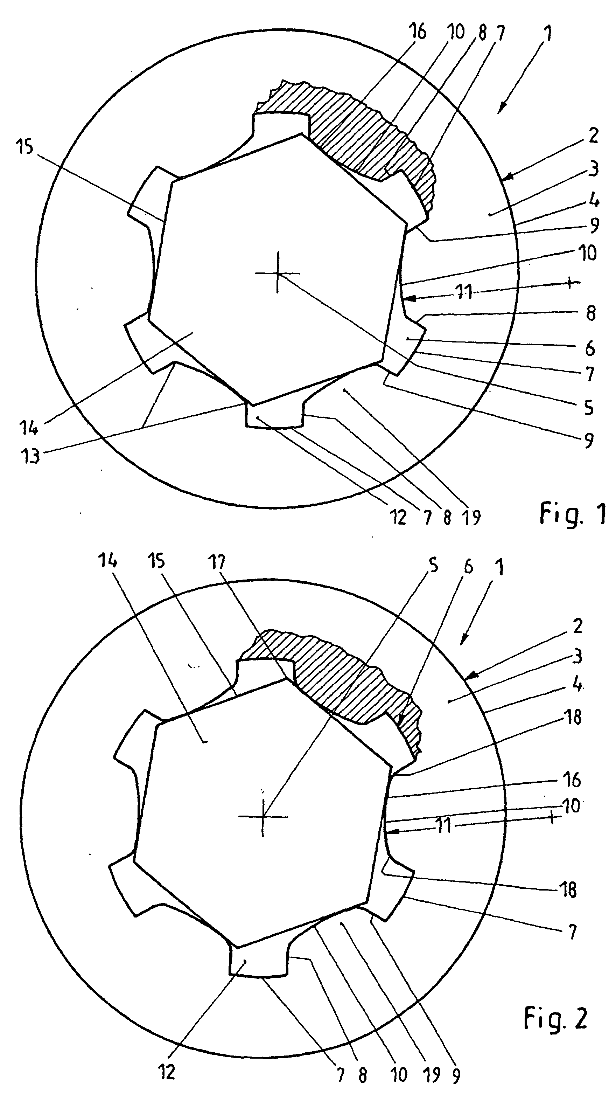

In Fig. 1 ist das Verbindungselement in Form einer Schraube 1 dargestellt. Von der Schraube 1 ist nur deren Kopf 2 mit Stirnfläche 3 und Umfangsfläche 4 zu sehen, während der mit Gewinde versehene Schaft hinter der Zeichenebene liegt und nicht dargestellt ist. Die Schraube 1 weist eine Achse 5 auf, die sich senkrecht zur Zeichenebene erstreckt.

Im Kopf 2 der Schraube 1 erstreckt sich ausgehend von der freien Stirnfläche 3 bis zu einer gewissen Tiefe in den Kopf 2 hinein ein keilwellenförmig ausgebildeter Innenmehrkant 6. Der Innenmehrkant 6 setzt sich aus einer Vielzahl von Einzelflächen zusammen, die sich parallel zur Achse 5 und damit auch parallel zu der Umfangsfläche 4 erstrecken. Diese Einzelflächen sind also nicht konisch ausgebildet bzw. besitzen nur eine sehr geringe, herstellungsbedingte und hier vernachlässigbare Konizität. Der Innenmehrkant 6 besitzt so Tangentialflächen 7, die hier kreisbogenförmig ausgebildet sind und sich in Umfangsrichtung erstrecken. An jede Tangentialfläche 7 schließt sich auf der linken Seite eine Radialfläche 8 und auf der rechten Seite eine Radialfläche 9 an. Die Radialflächen 8 und 9 laufen hier parallel zueinander, d. h. sie sind nicht exakt radial zu der Achse 5 ausgerichtet. Die Radialflächen 8 und 9 können aber auch genau radial angeordnet sein. Zwischen zwei benachbarten Tangentialflächen 7 bzw. deren einander zugekehrten Radialflächen 9 und 8 erstreckt sich eine Verbindungsfläche 10, die hier kreisbogenförmig ausgebildet ist. Die Verbindungsfläche 10 besitzt einen Radius 11, dessen Mittelpunkt in der Regel außenhalb der Umfangsfläche 4 des Kopfes 2 angeordnet ist. Damit erhält die Verbindungsfläche 10 eine kreisbogenförmige Kontur, die sich konvex von außen nach innen, also zu der Achse 5 erstreckt. Die Radialflächen 8 und 9 in Verbindung mit jeweils einer Tangentialfläche 7 stellen eine nach außen gerichtete Ausnehmung oder einen Lappen 12 dar, der Bestandteil des von dem Innenmehrkant 6 umschlossenen Hohlraums ist. Die Radialflächen 8 und 9 in Verbindung mit je einer Verbindungsfläche 10 stellen einen Lappen 19 dar, der sich radial von außen nach innen erstreckt und keinen Hohlraum bietet, sondern materialbehaftet ausgebildet ist.

Die Verbindungsflächen 10 sind kreisbogenförmig gekrümmt ausgebildet. An jedem Übergang zwischen der Verbindungsfläche 10 und der anschließenden Radialfläche 8 bzw. 9 entsteht hier eine Kante 13.

Der keilwellenförmige Innenmehrkant 6 dient dem Angriff eines Spezialschlüssels, welcher mit ähnlicher Kontur wie der Innenmehrkant 6, jedoch mit entsprechendem Spiel kleiner gestaltet ist. Mit einem solchen Spezialwerkzeug wird die Schraube 1 im Normalbetrieb angezogen bzw. gelöst.

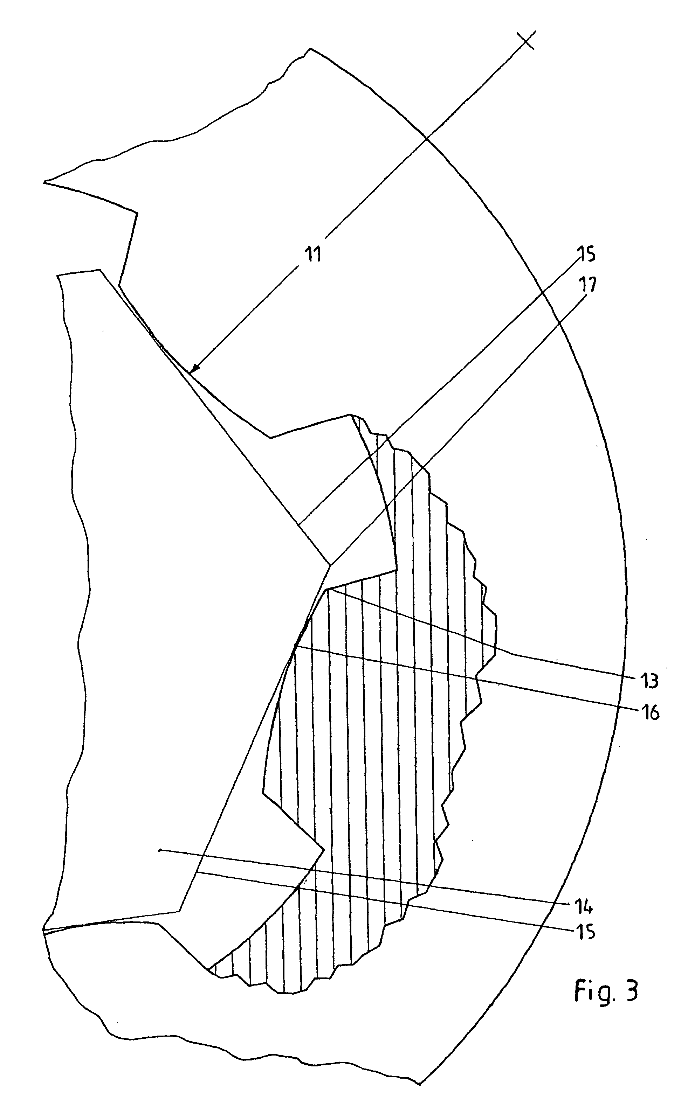

Wenn jedoch ein solcher Spezialschlüssel nicht greifbar ist, kann in einem Notbetrieb ein Sechskantschlüssel 14 Verwendung finden. Der Sechskantschlüssel 14 weist sechs ebene Flächen 15 auf. Es handelt sich um einen Sechskantschlüssel 14 der Normreihe. Seinem Profil und dem Profil des zugehörigen Sechkantloches zugeordnet ist der keilwellenförmige Innenmehrkant 6 ausgebildet und dimensioniert. Nach dem Einführen des Sechskantschlüssels 14 in den keilwellenförmigen Innenmehrkant 6 läßt sich der Sechskantschlüssel 14 zunächst kraftlos verdrehen. In Fig. 1 ist die Verdrehung in Anziehrichtung bei einem normalen Rechtsgewinde dargestellt. Am Ende dieser Verdrehbewegung legen sich die ebenen Flächen 15 an den gekrümmten Verbindungsflächen 10 unter zunächst linienförmiger Berührung an. Dieser Zustand ist in Fig. 1 dargestellt und in Fig. 3 in vergrößertem Maßstab nochmals wiedergegeben. Die Berührung erfolgt längs einer Linie 16. Sobald jedoch ein Drehmoment aufgebracht wird, hier in Anziehrichtung der Schraube, erfolgt eine Deformation im Bereich der Linie 16 in der Weise, daß die Linie 16 in eine mehr oder weniger ausgedehnte flächige Berührung zwischen der ebenen Fläche 15 und der betreffenden Verbindungsfläche 10 übergeht. Durch diese flächige Berührung wird die Flächenpressung verringert. Es besteht keine Gefahr, daß die Kante 13 am Übergang zwischen der Verbindungsfläche 10 und der Radialfläche 9 bleibend verformt wird. Es ist auch erkennbar, daß der Sechskantschlüssel 14 mit seiner Kante 17 weder an der Kante 13 noch an der Verbindungsfläche 10 zur Anlage kommt. Die flächige Anlage zwischen der Fläche 15 und der Verbindungsfläche 10 wird sich um die Linie 16 herum aufbauen. Dies gilt für das Anziehen der Schraube 1. Es versteht sich, daß beim Lösen der Schraube 1 der flächige Kontakt symmetrisch an anderer Stelle zu der Verbindungsfläche 10 erfolgt. Die Linie 16 und die sich bei Kraftaufbringung ergebende flächige Berührung wird sich an unterschiedlichen Stellen des Verlaufs der Verbindungsfläche 10 einstellen, je nach dem, welche Toleranzen der Verbindungsflächen 10 an der Schraube 1 mit welchen Toleranzen der Flächen 15 an dem Sechskantschlüssel 14 zusammentreffen. Es ist eine geometrische Gestaltung dieser beiden Teile und eine toleranzmäßige Bearbeitung beherrschbar, bei denen weder die Kanten 13 noch die Kanten 17 in Kontakt mit dem jeweiligen anderen Element kommen. Die flächige Anlage unter Drehmomenteinwirkung wird damit in allen Zuständen eingehalten.

Das Ausführungsbeispiel der Fig. 2 ist in weiten Bereichen ähnlich aufgebaut wie das Ausführungsbeispiel der Fig. 1 und 3, weshalb auf die vorangehende Beschreibung verwiesen werden kann. Bei dem Ausführungsbeispiel der Fig. 2 fehlen jedoch an dem Innenmehrkant 6 die Kanten 13. Der Übergang zwischen der Verbindungsfläche 10 und der jeweiligen Radialfläche 8 bzw. 9 wird von einer Abrundung 18 gebildet, die mit stetigem Übergang in die kreisbogenförmig gestaltete Verbindungsfläche 10 übergeht.

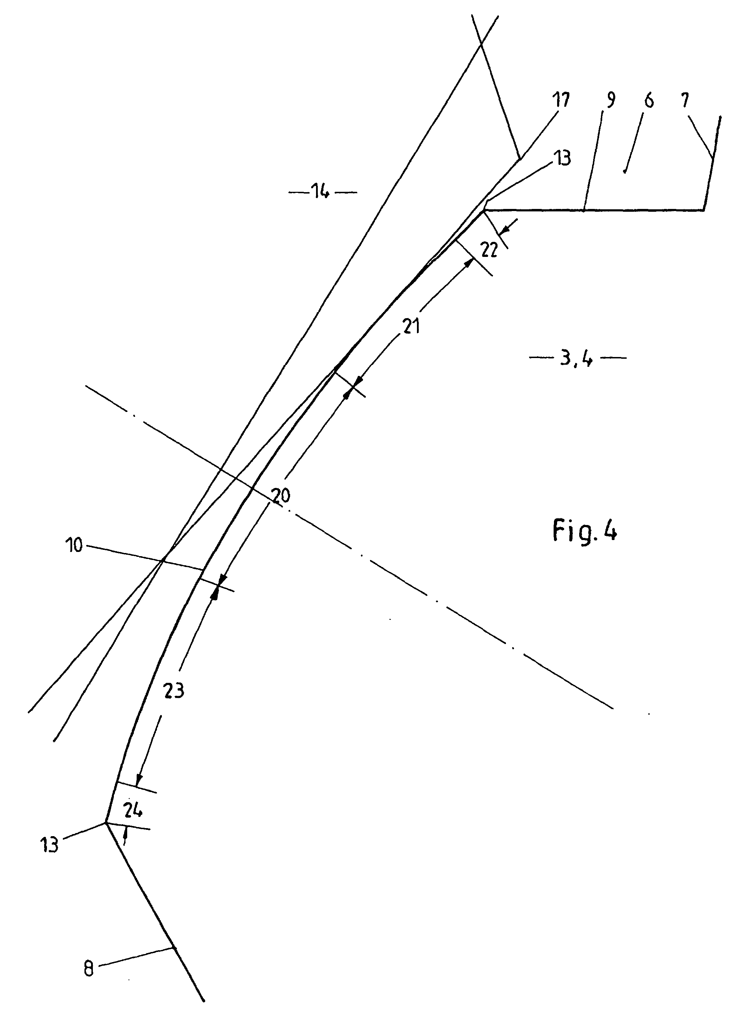

In den Fig. 3 und 4 ist die flächige Anlage der ebenen Seitenflächen des Sechskantschlüssels 14 an die zylindrische Kontur der Verbindungsflächen 10 des Innenmehrkants 6 verdeutlicht. Es ist erkennbar, daß beim Aufbringen eines Drehmomentes eine flächige Anlage erfolgt. Die dabei in Kontakt kommenden Flächen sparen einerseits die Kante 13 zwischen der Verbindungsfläche 10 und der Radialfläche 9 oder einen durch Abrundung 18 gebildeten Übergangsbereich aus. Die Anlage erfolgt benachbart zu der Kante 13 auf möglichst großem Radius. An der Kante 13 bzw. einem Übergangsbereich wird ein Freiraum geschaffen, in welchem keine Anlage erfolgt. Ebenso bleibt ein Mittelbereich 20 frei von jeglicher Anlage, so daß dieser Mittelbereich 20 auch eben abgeplattet ausgebildet sein könnte. Unter Berücksichtigung der Toleranzbänder der Kontur des Sechskantschlüssels 14 sowie des zugehörigen Sechskantloches wird ein Anlagebereich 21 geschaffen, in welchem die Anlage stattfindet. Je nach den Toleranzpaarungen wird die Anlage weiter außen oder weiter innen im Anlagebereich 21 stattfinden. Ein Freiraum 22 im Anschluß an die Kante 13 bleibt frei. Für das Losdrehen der Schraube 1 gilt Entsprechendes bezüglich eines Anlagebereichs 23 und eines Freiraums 24.

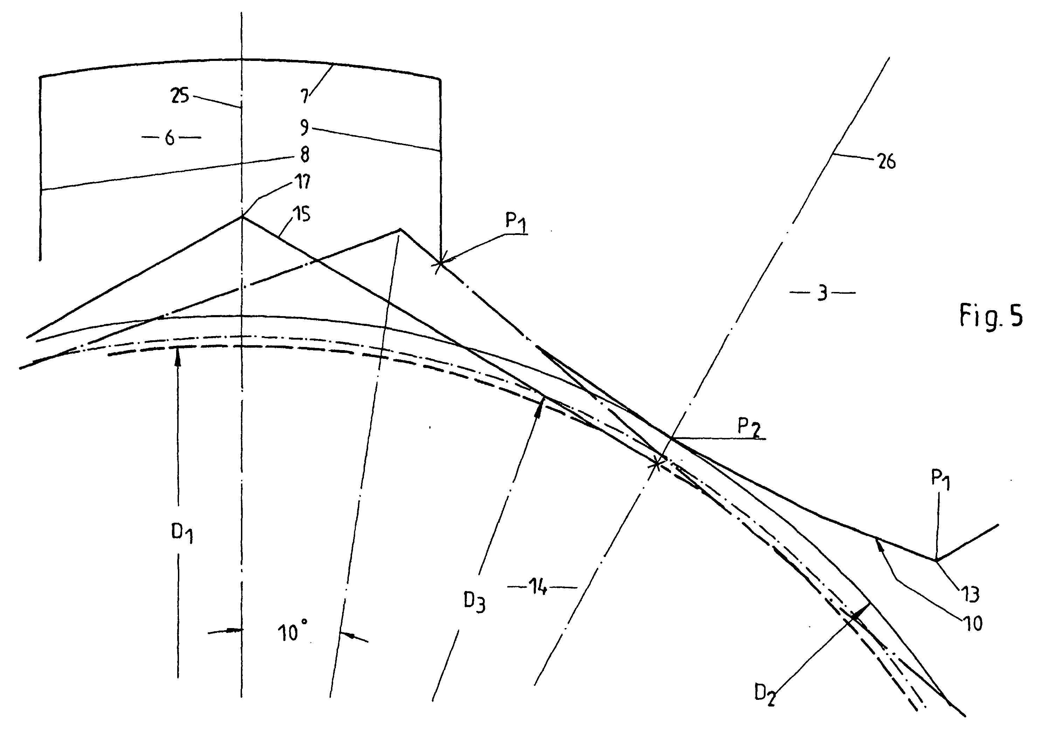

Anhand von Fig. 5 wird das Konstruktionsprinzip für die Ausbildung der kreisbogenförmigen bzw. zylindermantelförmigen Kontur der Verbindungsfläche 10 erläutert:

Es wird von einer gegebenen Kontur des Innenmehrkants 6 mit der Lage der Tangentialflächen 7 und den sich daran anschließenden Radialflächen 8 und 9 ausgegangen. Damit ist insbesondere die Breite der lappenförmigen Ausnehmung des Innenmehrkants, also die Entfernung zwischen zwei zueinander gehörigen Radialflächen 8 und 9, festgelegt. Diese Breite wird unter Berücksichtigung der zu übertragenden Drehmomente, der auftretenden Abscherbeanspruchung eines solchen sich radial nach außen ergebenden Zahnes eines Spezialwerkzeuges usw. ausgelegt. In einen bis hierher festgelegten Innenmehrkant 6 wird nun ein Sechskantschlüssel 14 so eingebracht, daß dessen Kanten 17 genau auf den Symmetrielinien 25 liegen, zu denen die lappenförmigen Ausnehmungen des Innenmehrkants 6 symmetrisch sind. Dieser Sechskantschlüssel 14 weist einen Innenkreis mit dem Durchmesser D₁ auf. Es wird insbesondere die Kontur des größten gemäß dem Toleranzband der Normreihe zulässigen Sechskantschlüssels 14 gewählt. Bei einer Drehung des Sechskantschlüssels 14 um die Achse 5 um etwa 10° ergibt sich die strichpunktiert dargestellte Kontur des Sechskantschlüssels 14 mit seinen Flächen 15. Dabei schneiden die Flächen 15 die Radialflächen 9 und 8 in gespiegelter Anordnung bzw. Verdrehung um 10° nach der anderen Drehrichtung. Die Verdrehung kann je nach Größenordnung der Schraube 1 und Ausbildung der lappenförmigen Ausbuchtung des Innenmehrkants 6 zwischen etwa 8° und 12° betragen. Auf diese Weise werden zwei Punkte P₁ der Verbindungsfläche 10 festgelegt. Diese beiden Punkte P₁ gehören zu einem Kreis bzw. Zylinder, dessen Mittelpunkt M außen außerhalb des Kopfes der Schraube 1 auf einer Mittellinie 26 liegt und der den Radius 11 aufweist.

Zur Festlegung der Lage des Mittelpunkts M dieses Kreises bzw. der Bestimmung seines Radiusses 11 ist ein dritter Punkt P₂ erforderlich. Zur Festlegung dieses dritten Punktes P₂ wird von einem Durchmesser D₃ um die Achse 5 des Innenmehrkants 6 ausgegangen. Der Durchmesser D₃ ist der Durchmesser des gemäß dem Toleranzband kleinsten Innenkreises eines zu dem Sechskantschlüssel 14 gehörenden Sechskantloches. Damit ist bereits sichergestellt, daß sämtliche Sechskantschlüssel 14 entsprechend ihrem zulässigen Toleranzband in die Ausnehmung des Innenmehrkants 6 einführbar sind. Um jedoch eine weitgehend nutzlose Anlage im Mittelbereich 20 der Verbindungsfläche zu vermeiden, wird ein Durchmesser D₂ um die Achse 5 der Schraube 1 gelegt. Der Durchmesser D₂ ist um etwa 0,08 mm bis 0,15 mm größer als der Durchmesser D₃. Je nach Größenordnung der Schraube werden insbesondere gute Ergebnisse dann erreicht, wenn der Durchmesser D₂ um etwa 0,1 mm größer als der Durchmesser D₃ ist. Als Schnittpunkt dieses Kreises mit dem Durchmesser D₂ und der Mittellinie 26 ergibt sich der Punkt P₂ als dritter Punkt zur Festlegung des Kreises. Anders gesagt berühren sich die Kreise mit dem Radius 11 einerseits und mit dem Durchmesser D₂ andererseits tangential entlang einer Linie durch den Punkt P₂.

Zur weiteren Verdeutlichung werden nachfolgend die Daten für ein Ausführungsbeispiel zugehörig zu einem Sechskantschlüssel 14 der Schlüsselweite SW 8 DIN 7422 angegeben:

Der Durchmesser D₁ beträgt 8,000 mm. Entsprechend dem zulässigen Toleranzband für einen Innensechskantschlüssel 14 kann dieser Durchmesser D₁ von D₁ₘᵢₙ = 7,942 mm bis D₁ₘₐₓ = 8,000 mm schwanken. Bei einer Breite der lappenförmigen Ausnehmung, also einer Entfernung b der Radialflächen 8 und 9 voneinander von z.B. etwa b = 1,9 mm liegt der Punkt P₁ auf einem Durchmesser von 9,28 mm.

Der Durchmesser D₃ eines zugehörigen Sechskantloches kann zwischen D₃ₘᵢₙ = 8,06 mm und D₃ₘₐₓ = 8,12 mm schwanken. Es wird hier ausgegangen von 8,10 mm. Durch Addition des Betrages von etwa 0,1 mm ergibt sich D₂ = 8,20 mm. Damit entsteht ein Kreis um den Mittelpunkt M mit dem Radius 11 = 3,56 mm.

### BEZUGSZEICHENLISTE

- 1 -: Schraube
- 2 -: Kopf
- 3 -: Stirnfläche
- 4 -: Umfangsfläche
- 5 -: Achse
- 6 -: Innenmehrkant
- 7 -: Tangentialfläche
- 8 -: Radialfläche
- 9 -: Radialfläche
- 10 -: Verbindungsfläche

- 11 -: Radius
- 12 -: Lappen
- 13 -: Kante
- 14 -: Sechskantschlüssel
- 15 -: Fläche
- 16 -: Linie
- 17 -: Kante
- 18 -: Abrundung
- 19 -: Lappen
- 20 -: Mittelbereich

- 21 -: Anlagebereich
- 22 -: Freiraum
- 23 -: Anlagebereich
- 24 -: Freiraum
- 25 -: Symmetrielinie
- 26 -: Mittellinie

## Patentansprüche

1. Verbindungselement mit einem Kopf (2) und einem zumindest teilweise mit einem Gewinde versehenen Schaft, wobei der Kopf (2) in punktsymmetrischer Anordnung um die Achse (5) des Verbindungselements einen keilwellenförmigen Innenmehrkant (6) aus im wesentlichen in Umfangsrichtung gerichteten Tangentialflächen (7), aus zwei an jede Tangentialfläche (7) anschließenden, in etwa radial ausgerichteten oder zumindest angenähert parallel zueinander angeordneten Radialflächen (8, 9) und aus einer etwa in Umfangsrichtung verlaufenden Verbindungsfläche (10), die zwei an benachbarte Tangentialflächen (7) anschließende Radialflächen (9, 8) verbindet, aufweist, **dadurch gekennzeichnet, daß** für die Verwendung eines Sechskantschlüssels (14) der Normreihe im Notbetrieb die Verbindungsfläche (10) kreisbogenförmig gekrümmt und in Richtung auf die Achse (5) des Verbindungselementes konvex ausgebildet ist, wobei der den Kreisbogen bildende Kreis von zwei Punkten (P₁), die sich als Schnittpunkte der Kontur des symmetrisch in den Innenmehrkant (6) eingesteckten Sechskantschlüssels (14) nach einer Drehung von etwa 8° bis 12° mit den Radialflächen (8, 9) des Innenmehrkants (6) ergeben, und einem dritten Punkt (P₂), der tangential zu einem Kreis mit einem Durchmesser (D₂) um die Achse (5) des Verbindungselements liegt und der Durchmesser (D₂) um etwa 0,08 mm bis 0,15 mm größer als der Durchmesser (D₃) des minimalen Innenkreises der Verbindungsflächen (10) des Innenmehrkants (6) entsprechend dem minimalen Innenkreis eines dem Sechskantschlüssel (14) zugeordneten Sechskantloches der Normreihe bemessen ist, gebildet wird.

2. Verbindungselement nach Anspruch 1, **dadurch gekennzeichnet, daß** der Punkt (P₁) als Schnittpunkt der Kontur des symmetrisch in den Innenmehrkant (6) eingesteckten Sechskantschlüssels (14) nach einer Drehung von etwa 10° mit den Radialflächen (8, 9) des Innenmehrkants (6) festgelegt ist.

3. Verbindungselement nach Anspruch 1 oder 2, **dadurch gekennzeichnet, daß** der Durchmesser (D₂) des den dritten Punkt (P₂) bildenden Kreises um etwa 0,1 mm größer als der Durchmesser (D₃) des minimalen Innenkreises des dem Sechskantschlüssel (14) zugeordneten Sechskantloches bemessen ist.

4. Verbindungselement nach einem oder mehreren der Ansprüche 1 bis 3, **dadurch gekennzeichnet, daß** die Übergänge zwischen den Verbindungsflächen (10) und den Radialflächen (8, 9) abgerundet ausgebildet sind.

5. Verbindungselement nach einem oder mehreren der Ansprüche 1 bis 4, **dadurch gekennzeichnet, daß** die Übergänge zwischen den Tangentialflächen (7) und den Radialflächen (8, 9) abgerundet ausgebildet sind.

6. Verbindungselement nach einem oder mehreren der Ansprüche 1 bis 5, **dadurch gekennzeichnet, daß** die kreisbogenförmige Krümmung der Verbindungsfläche (10) zumindest in zwei Bereichen der Verbindungsfläche (10) im Anschluß an die Punkte (P₁) in Richtung auf den Punkt (P₂) vorgesehen ist, sodaß bei Verwendung des Sechskantschlüssels (14) der Normreihe im Notbetrieb diese Bereiche der konvexen Verbindungsflächen (10) des keilwellenförmigen Innenmehrkants (6) jeweils an ebenen Flächen (15) des Sechskantschlüssels (14) anliegen.

## Claims

1. A fastener comprising a head (2) and a shank at least partially including a threaded portion, the head (2) including an inner polygon (6) having a design corresponding to a spline shaft and being located point-symmetrically about the axis (5), the inner polygon (6) being formed by a plurality of tangential surfaces (7) substantially extending in a circumferential direction, by a plurality of radial surfaces (8, 9) each being connected to one of the tangential surfaces (7), and by a plurality of connecting surfaces (10) substantially extending in a circumferential direction and each connecting two radial surfaces (9, 8) being associated with adjacent tangential surfaces (7), **wherein** the connecting surfaces (10) each having a bent design in the form of a circular arc and being designed and arranged to be convex in a direction towards the axis (5) for engagement of a hexagon wrench (14) of the standard range during emergency operation, the circular arc being formed by a circle which is formed by two first points (P₁) resulting from an intersection of the contour of the hexagon wrench (14) when it is symmetrically inserted into the inner polygon (6) after a turning movement of approximately 8° to 12° and the radial surfaces (8, 9) of the inner polygon (6), and a third point (P₂) being located in a tangential direction with respect to a circle having a diameter (D₂) about the axis (5), the diameter (D₂) being approximately 0,08 mm to 0,15 mm more than a diameter (D₃) of a minimum inner circle of the connecting surfaces (10) corresponding to a minimum inner circle of a hexagon hole of the standard range being associated with the hexagon wrench (14).

2. The fastener of claim 1, **wherein** the first point (P₁) is determined as intersecting point of the contour of the hexagon wrench (14) when it is symmetrically inserted into the inner polygon (6) after a turning movement of approximately 10° and the radial surfaces (8, 9) of the inner polygon (6).

3. The fastener of claim 1 or 2, **wherein** the diameter (D₂) of the circle forming the third point (P₂) is approximately 0,1 mm more than the diameter (D₃) of the minimum inner circle of the hexagon hole being associated with the hexagon wrench (14).

4. The fastener of one or more of the claims 1 to 3, **wherein** the transitions between the connecting surfaces (10) and the radial surfaces (8, 9), are designed to have a rounded design.

5. The fastener of one or more of the claims 1 to 4, **wherein** the transitions between the tangential surfaces (7) and the radial surfaces (8, 9), are designed to have a rounded design.

6. The fastener of one or more of the claims 1 to 5, **wherein** the bent design in the form of a circular arc of the connecting surfaces (10) is arranged at least in two regions of the connecting surfaces (10) in a direction from the first points (P₁) towards the point (P₂) in a way that these regions of the convex connecting surfaces (10) of the inner polygon (6) contact plane surfaces (15) of a hexagon wrench (14) when a hexagon wrench (14) taken from the standard range is used during emergency operation.

## Revendications

1. Elément de liaison comportant une tête (2) et une tige pourvue au moins en partie d'un filetage, la tête (2) comprenant, dans une disposition à symétrie ponctuelle autour de l'axe (5) de l'élément de liaison, un polygone creux (6) en forme d'arbre cannelé, constitué de surfaces tangentielles (7) orientées sensiblement dans la direction périphérique, de deux surfaces radiales (8, 9) se raccordant à chaque surface tangentielle (7), orientées à peu près radialement ou disposées au moins approximativement parallèlement l'une à l'autre, et d'une surface de liaison (10) s'étendant approximativement dans la direction périphérique laquelle relie deux surfaces radiales (8, 9) se raccordant à des surfaces tangentielles (7) adjacentes, **caractérisé en ce que** pour l'utilisation en urgence d'une clé hexagonale (14) normalisée, la surface de liaison (10) est courbée en arc de cercle et est réalisée convexe en direction de l'axe (5) de l'élément de liaison, le cercle formant l'arc de cercle étant formé par deux points (P₁) qui sont les points d'intersection du contour de la clé hexagonale (14), enfichée symétriquement dans le polygone creux (6), après une rotation d'environ 8° à 12°, avec les surfaces radiales (8,9) du polygone creux (6), et par un troisième point (P₂) qui est tangentiel à un cercle d'un diamètre (D₂ ) autour de l'axe (5) de l'élément de liaison, et le diamètre (D₂) est d'environ 0,08 mm à 0,15 mm supérieur au diamètre (D₃) du cercle intérieur minimal des surfaces de liaison (10) du polygone creux (6) correspondant au cercle intérieur minimal d'un trou hexagonal normalisé, associé à la clé hexagonale (14).

2. Elément de liaison selon la revendication 1, **caractérisé en ce que** le point (P₁) est défini comme point d'intersection du contour de la clé hexagonale (14), enfichée symétriquement dans le polygone creux (6), après une rotation d'environ 10°, avec les surfaces radiales (8, 9) du polygone creux (6).

3. Elément de liaison selon la revendication 1 ou 2, **caractérisé en ce que** le diamètre (D₂) du cercle formant le troisième point (P₂) est approximativement supérieur de 0,1 mm au diamètre (D₃) du cercle intérieur minimal du trou hexagonal associé à la clé hexagonale (14).

4. Elément de liaison selon une ou plusieurs des revendications 1 à 3, **caractérisé en ce que** les transitions entre les surfaces de liaison (10) et les surfaces radiales (8, 9) sont réalisées arrondies.

5. Elément de liaison selon une ou plusieurs des revendications 1 à 4, **caractérisé en ce que** les transitions entre les surfaces tangentielles (7) et les surfaces radiales (8, 9) sont réalisées arrondies.

6. Elément de liaison selon une ou plusieurs des revendications 1 à 5, **caractérisé en ce que** la courbure en arc de cercle de la surface de liaison (10) est prévue au moins dans deux zones de la surface de liaison (10), à la suite des points (P₁) en direction du point (P₂), de sorte que lorsque l'on utilise la clé hexagonale (14) normalisée, en urgence, ces zones des surfaces de liaison (10) convexes dans le polygone creux (6) en forme d'arbre cannelé, s'appliquent chacune contre des surfaces (15) planes de la clé hexagonale (14).
